# EUROPÄISCHE PATENTSCHRIFT

(11) **EP 0 479 060 B1**
(45) Veröffentlichungstag und Bekanntmachung des Hinweises auf die Patenterteilung: **05.01.1994**
(21) Anmeldenummer: 91115984.6
(22) Anmeldetag: 20.09.1991
(51) Int. Cl.: B26D 1/60, B26D 7/08, B23D 47/04, B29C 67/22, B32B 31/18

(54) **Verfahren und Anlage zum kontinuierlichen Herstellen von Sandwichelementen**
Method and equipment for the continuous manufacture of sandwich elements
Procédé et dispositif pour la fabrication en continu d'éléments sandwich

(30) Priorität: 03.10.1990 DE 4031145
(43) Veröffentlichungstag der Anmeldung: 08.04.1992
(73) Patentinhaber: MASCHINENFABRIK HENNECKE GmbH, D-51379 Leverkusen (DE)
(72) Erfinder: Proksa, Ferdinand, Dr., W-5090 Leverkusen 3 (DE); Sulzbach, Hans-Michael, Dipl.-Ing., W-5330 Königswinter 21 (DE); Klonk, Hans, Dipl.-Ing., W-5300 Bonn 1 (DE); Raffel, Reiner, Dipl.-Ing., W-5200 Siegburg 1 (DE)
(74) Vertreter: Drope, Rüdiger, Dr.

(56) Entgegenhaltungen:
- EP-A- 0 004 193
- WO-A-88/04589
- DE-A- 3 806 070
- US-A- 3 165 017

## Beschreibung

Die Erfindung betrifft ein Verfahren und eine Vorrichtung zum kontinuierlichen Herstellen von Sandwichelementen mit einem Schaumstoffkern zwischen zwei Deckschichten, wobei ein schäumfähiges Reaktionsgemisch zwischen den Deckschichten aufschäumen und zum Schaumstoffkern aushärten gelassen wird; von dem so gebildeten, endlosen Sandwichstrang jeweils ein Sandwichelement gewünschter Länge mittels eines auf einem mit der Vorschubgeschwindigkeit des Sandwichstranges mitfahrenden Wagen angeordneten Querschneiders abgeschnitten wird; das Sandwichelement nach dem Abschneiden mittels eines Transportwagens beschleunigt und durch den so gebildeten Spalt eine Reinigungsbürste geführt wird, bevor es abtransportiert wird.

Aus DE-C1-38 06 070 ist es bekannt, mittels einer dem Querschneider nachgeordneten Reinigungsvorrichtung, welche auf einem verfahrbaren Transportwagen angeordnet ist, die Sandwichelemente von dem anhaftenden Schneidstaub und, soweit es sich um metallische Deckschichten handelt, von dem beim Schneiden entstehenden Graf zu befreien.

Diese Ausführungsform ist sehr aufwendig, und insbesondere bereitet das mehrmalige Greifen der abgelängten Sandwichelemente Schwierigkeiten. Es kann zu Stauchungen kommen, weil sich die Fahrgeschwindigkeit des Wagens der Reinigungsvorrichtung nicht immer exakt mit der Vorschubgeschwindigkeit des Sandwichstranges koordinieren läßt. Verkantet ein Sandwichelement beim Festklemmen in der Reinigungsvorrichtung, so kann unter Umständen eine unerwünschte Belastung des Sägeblattes des Querschneiders erfolgen, wodurch ein schräger Schnitt entsteht.

Es besteht die Aufgabe, ein Verfahren und eine Anlage zum Herstellen von Sandwichelementen zu schaffen, wobei eine störungsfreie Produktion auch bei einem nachgeschalteten Reinigungsvorgang gewährleistet ist.

Gelöst wird diese Aufgabe dadurch, daß der Transportwagen nach dem vorangegangenen Reinigungsvorgang zum Wagen des Querschneiders zurückgefahren wird, um das nächste Sandwichelement aufzunehmen, dort abgebremst und anschließend wieder in Produktionsrichtung beschleunigt und so lange mit gegenüber der Vorschubgeschwindigkeit des Sandwichstranges geringfügig höherer Geschwindigkeit bewegt wird, bis er eine gewünschte Distanz zum Wagen des Querschneiders erreicht hat, nunmehr mit der Vorschubgeschwindigkeit des Sandwichstranges weiterbewegt wird; und daß der Transportwagen nach dem Ablängen des Sandwichelementes zur Bildung des für den Reinigungsvorgang notwendigen Spaltes erneut beschleunigt wird.

Dadurch ist es möglich, den Wagen des Querschneiders und den Transportwagen der Reinigungsvorrichtung stoßfrei derart in Position zu bringen, daß sie beim Fahren in Produktionsrichtung des Stranges eine gewünschte Distanz einnehmen und beibehalten, bis der Transportwagen nochmals beschleunigt wird, um den Spalt zum Hindurchführen der Reinigungsbürste zu bilden. Die gewünschte Distanz soll dabei so groß gewählt werden, daß auch bei einem Verkanten des Sandwichelementes keine Gefahr der Berührung mit dem Ende des Sandwichstranges besteht. Beim Einstellen der gewünschten Distanz gleitet der Transportwagen unter dem Strangende her. Als Reinigungsbürsten kommen Faserbürsten in Frage, aber auch Luftbürsten, mit denen man die Flächen abblasen kann. Es versteht sich, daß man der Reinigungsvorrichtung, ebenso wie dem Querschneider, eine Absaugeinrichtung zuordnen kann.

Vorzugsweise wird das Sandwichelement für den Reinigungsvorgang auf dem Transportwagen fixiert, nachdem es abgelängt ist.

Die Fixierung des Sandwichelementes ist besonders dann vorteilhaft, wenn es von geringem Gewicht ist und sich deshalb leicht beim Reinigen verschieben könnte.

Gemäß einer weiteren besonderen Ausführungsform wird während der erneuten Beschleunigung des Transportwagens die Reinigungsbürste in die Position für den Eingriffin den sich bildenden Spalt gefahren.

Diese Maßnahme ist immer dann erforderlich, wenn seitlich der Anlage nicht genügend Raum ist, d.h. wenn bei herangefahrenem Transportwagen die Reinigungsbürste in der gleichen Querebene wie der Querschneider keinen Platz hat.

Die neue Anlage zum kontinuierlichen Herstellen von Sandwichelementen mit Schaumstoffkern geht aus von einem Doppeltransportband mit Aufgabevorrichtung für ein schäumfähiges Reaktionsgemisch sowie Zuführungen für Deckschichten; einem dem Doppeltransportband nachgeordneten, in Produktionsrichtung verfahrbaren Wagen mit Querschneider und einem diesem nachgeordneten, in Produktionsrichtung verfahrbaren Transportwagen mit einer eine Bürste aufweisenden Reinigungsvorrichtung, wobei dem Transportwagen ein mit dem Querschneider und dessen Wagen gekoppeltes Steuer- und Regelgerät für deren Bewegung und der der Reinigungsvorrichtung zugeordnet ist.

Das Neue ist darin zu sehen, daß der Wagen eine Schaltstange aufweist, welche mit zwei am Transportwagen hintereinander angeordneten, über das Steuer- und Regelgerät mit dem Fahrantrieb des Transportwagens verbundenen Näherungsschaltern korrespondiert, wobei der der Schaltstange nächstgelegene, erste Näherungsschalter dem Abbremsen des Transportwagens und der zweite Näherungsschalter der Beschleunigung des Transportwagens in Produktionsrichtung auf eine geringfügig über der Vorschubgeschwindigkeit des Sandwichstranges liegende Geschwindigkeit sowie bei erneuter Freigabe durch die Schaltstange dem weiteren Vorschub des Transportwagens mit einer der Produktionsgeschwindigkeit des Sandwichstranges entsprechenden Geschwindigkeit zum Einstellen einer konstanten Distanz zwischen Transportwagen und Wagen des Querschneiders mittels des Steuer- und Regelgerätes dient.

Mittels der Schaltstange und dem ersten Näherungsschalter wird vermieden, daß der Transportwagen beim Zurückfahren mit dem Wagen des Querschneiders Kontakt bekommt, wodurch der Schnittvorgang gestört würde.

Sofern der Transportwagen in an sich bekannter Weise mit einer Klemmvorrichtung zum Fixieren des Sandwichelementes ausgestattet ist, ist diese Klemmvorrichtung durch das Öffnen einer dem Querschneider zugeordneten Klemmvorrichtung auslösbar.

Dabei ist sichergestellt, daß beide Klemmvorrichtungen über das Steuer- und Regelgerät erst betätigt werden, wenn der Trennschnitt des Querschneiders beendet ist.

Gemäß einer weiteren besonderen Ausführungsform besteht die Reinigungsvorrichtung aus einem gegen die Produktionsrichtung verfahrbaren Längsfahrzylinder, welcher einen eine Reinigungsbürste aufweisenden Querfahrzylinder trägt.

Dieser Längsfahrzylinder ermöglicht es, den Querfahrzylinder nebst Reinigungsbürste erst in Position zu bringen, wenn beides nicht mit dem Querschneider kollidieren kann.

In der Zeichnung ist die neue Anlage in einem Ausführungsbeispiel rein schematisch und vereinfacht dargestellt und nachstehend näher erläutert. Es zeigen:

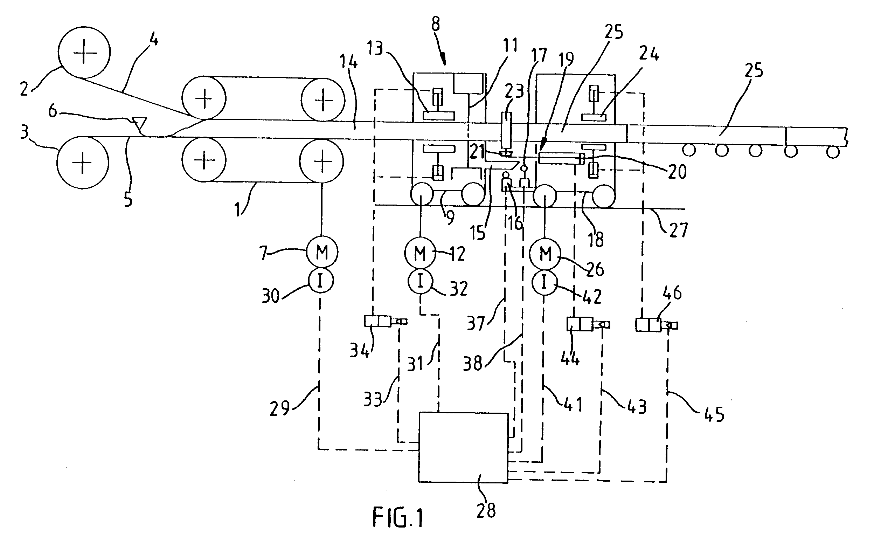

- Fig. 1: eine Seitenansicht der Anlage und
- Fig. 2: eine Draufsicht auf die Anlage.

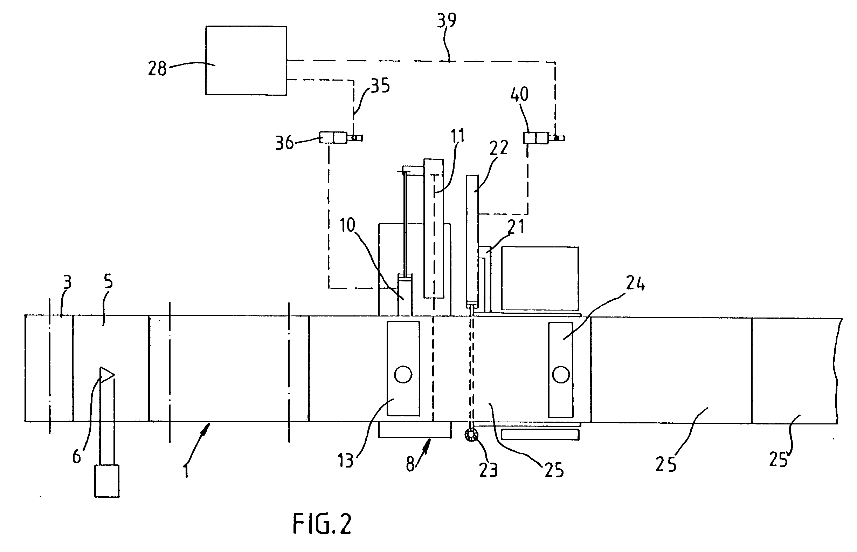

Die Anlage besteht aus einem Doppeltransportband 1 mit Zuführstationen 2 und 3 für eine obere Deckschicht 4 und eine untere Deckschicht 5 sowie aus einer Aufgabevorrichtung 6 für ein flüssiges, Schaumstoff bildendes Polyurethan-Reaktionsgemisch. Dem Doppeltransportband 1 ist ein elektrischer Antrieb 7 zugeordnet sowie ein Querschneider 8 nachgeordnet Dieser ist auf einem Wagen 9 montiert und besitzt eine mit einem hydraulischen Fahrzylinder 10 ausgestattete Sägevorrichtung 11. Außerdem besitzt der Wagen 9 einen elektrischen Fahrantrieb 12 und trägt eine Klemmvorrichtung 13 zum Erfassen des erzeugten Sandwichstranges 14. Außerdem besitzt der Wagen 9 eine Schaltstange 15, welche mit in Reihe angeordneten Näherungsschaltern 16 und 17 eines Transportwagens 18 für eine Reinigungsvorrichtung 19 korrespondieren. Die Reinigungsvorrichtung 19 besitzt einen Längsfahrzylinder 20 zum Verschieben eines quer angeordneten Trägers 21 entgegen der Produktionsrichtung der Anlage. Auf diesem Träger 21 ist ein Querfahrzylinder 22 angeordnet, welcher eine Reinigungsbürste 23 quer zur Produktionsrichtung bewegen kann. Auf dem Transportwagen 18 ist außerdem eine Klemmvorrichtung 24 zum Erfassen der abgelängten Sandwichelemente 25 angeordnet. Der Transportwagen 18 ist mit einem elektrischen Fahrantrieb 26 ausgerüstet. Wagen 9 und Transportwagen 18 sind auf einem Schienenstrang 27 verfahrbar. Der Anlage ist ein Steuer- und Regelgerät 28 zugeordnet. Dieses ist wie folgt verbunden: Über eine Impulsleitung 29 und einen Inkrementgeber 30 mit dem Antrieb 7 des Doppeltransportbandes 1; über eine Impulsleitung 31 und einen Inkrementgeber 32 mit dem Fahrantrieb 12 des Wagens 8; über eine Impulsleitung 33 und ein Ventil 34 mit der Klemmvorrichtung 13; über eine Impulsleitung 35 und ein Ventil 36 mit dem Fahrzylinder 10 der Sägevorrichtung 11 (Fig. 2); über Impulsleitungen 37 und 38 mit den Näherungsschaltern 16 und 17; über eine Impulsleitung 39 und ein Ventil 40 (Fig. 2) mit dem Querfahrzylinder 22 der Reinigungsbürste 23; über eine Impulsleitung 41 und einen Inkrementgeber 42 mit dem Fahrantrieb 26 des Transportwagens 18; über eine Impulsleitung 43 und ein Ventil 44 mit dem Längsfahrzylinder 20 der Reinigungsvorrichtung 19; und über eine Impulsleitung 45 und ein Ventil 46 mit der Klemmvorrichtung 24 des Transportwagens 18.

Die Arbeitweise ist folgende: Von den Zuführstationen 2 und 3 werden Deckschichten 4 und 5 in das Doppeltransportband 1 eingeführt, wobei auf die untere Deckschicht 5 mittels der Aufgabevorrichtung 6 eines zu Polyurethan-Hartschaumstoff ausreagierendes Reaktionsgemisch aufgegeben wird. Vom Antrieb 7 des Doppeltransportbandes 1 bzw. vom zugeordneten Inkrementgeber 30 werden dem Steuer- und Regelgerät 28 über die Impulsleitung 29 Impulsinkremente zugespeist. Dort werden diese Impulse mit jenen verglichen, die der Inkrementgeber 32 des Fahrantriebes 12 des Wagens 9 einspeist. Bei Synchronität wird vom Steuer- und Regelgerät 28 über die Impulsleitung 33 und das Ventil 34 die Klemmvorrichtung 13 ausgelöst, so daß der Sandwichstrang 14 eingeklemmt ist. Dadurch werden Schwingungen und seitliches Verschieben beim Schneiden vermieden. Sodann erhält der Fahrzylinder 10 vom Steuer- und Regelgerät 28 über die Impulsleitung 35 und das Ventil 36 Befehl, die Sägevorrichtung 11 zu betätigen. Nach Beendigung des Schnittes erhält die Klemmvorrichtung 13 des Fahrzylinders 10 über das Steuer- und Regelgerät 28 Befehl zum Öffnen. Während des Schnittvorganges wird der Transportwagen 18 entgegen der Produktionsrichtung zurückgefahren und fährt mit dem Näherungsschalter 16 gegen die Schaltstange 15. Dadurch wird der Transportwagen 18 abgebremst und gestoppt, ohne daß er den Wagen 9 berührt. Dieses Abbremsen geschieht, indem vom Näherungsschalter 16 ein Impuls über die Impulsleitung 37 an das Steuergerät 28 gegeben wird, und von diesem Steuer- und Regelgerät 28 über die Impulsleitung 41 der Motor 26 des Transportwagens 18 abgebremst und gestoppt wird. Während der Transportwagen 18 nun steht, fährt der Wagen 9 weiter. Sobald seine Schaltstange 15 den Näherungsschalter 17 auslöst, gelangt ein Impuls über die Impulsleitung 38 an das Steuer- und Regelgerät 28, welches seinerseits einen Impuls über die Impulsleitung 41 und den Inkrementgeber 42 an den Motor 26 weiterleitet, welcher nun den Transportwagen 18 auf eine Geschwindigkeit beschleunigt, welche geringfügig höher ist als die Produktionsgeschwindigkeit des Doppeltransportbandes 1. D.h., der Transportwagen 18 entfernt sich nun langsam vom Wagen 9. In dem Augenblick, in welchem der Näherungsschalter 17 von der Schaltstange 15 wieder freigegeben wird, wird auf synchrone Geschwindigkeit zwischen der Produktionsgeschwindigkeit und dem Transportwagen 18 umgesteuert.

Nach Beendigung des Schnittes erhält mit dem Öffnen der Klemmvorrichtung 13 die Klemmvorrichtung 24 über die Impulsleitung 45 und das Ventil 46 vom Steuer- und Regelgerät 28 Befehl, das abgelängte Sandwichelement 25 einzuklemmen. Der Wagen 9 fährt nunmehr entgegen der Produktionsrichtung in die Ausgangsstellung zurück. Der Transportwagen 18 wird nun mit höherer Geschwindigkeit als die Produktionsgeschwindigkeit bewegt, so daß ein Spalt zwischen dem Ende des Sandwichstranges 14 und dem abgelängten Sandwichelement 25 entsteht. Auch diesen Befehl gibt das Steuer- und Regelgerät an den Fahrantrieb 26. Währenddessen wird der Längsfahrzylinder 20 über die Impulsleitung 43 und das Ventil 44 betätigt und damit der Querfahrzylinder 22 in die Höhe des gebildeten Spaltes gebracht. In seiner Endstellung gibt der Längsfahrzylinder 20 ein Signal zurück, wodurch der Querfahrzylinder 22 vom Steuer- und Regelgerät 28 über die Impulsleitung 39 und das Ventil 40 Befehl bekommt, die Reinigungsbürste 23 durch den Spalt zu fahren. Wenn der Querfahrzylinder 22 die Beendigung des Reinigungsvorganges signalisiert, erhält die Klemmvorrichtung 24 vom Steuer- und Regelgerät 28 Befehl zu öffnen und auch der Längsfahrzylinder 20 erhält den Befehl, in die Ausgangsstellung zurückzufahren. Schließlich erhält auch der Fahrantrieb 26 das Signal, den Transportwagen 18 entgegen der Produktionsrichtung in die Ausgangsstellung zum Wagen 8 hinzu bewegen, so daß der nächste Zyklus stattfinden kann.

## Patentansprüche

1. Verfahren zum kontinuierlichen Herstellen von Sandwichelementen (25) mit einem Schaumstoffkern zwischen zwei Deckschichten (4, 5), wobei ein schäumfähiges Reaktionsgemisch zwischen den Deckschichten (4, 5) aufschäumen und zum Schaumstoffkern aushärten gelassen wird; von dem so gebildeten, endlosen Sandwichstrang (14) jeweils ein Sandwichelement (25) gewünschter Länge mittels eines auf einem mit der Vorschubgeschwindigkeit des Sandwichstranges (14) mitfahrenden Wagen (9) angeordneten Querschneiders (8) abgeschnitten wird; das Sandwichelement (25) nach dem Abschneiden mittels eines Transportwagens (18) beschleunigt und durch den so gebildeten Spalt eine Reinigungsbürste (23) geführt wird, bevor es abtransportiert wird, dadurch gekennzeichnet, daß der Transportwagen (18) nach dem vorangegangenen Reinigungsvorgang zum Wagen (9) des Querschneiders (8) zurückgefahren wird, um das nächste Sandwichelement (25) aufzunehmen, dort abgebremst und anschließend wieder in Produktionsrichtung beschleunigt und so lange mit gegenüber der Vorschubgeschwindigkeit des Sandwichstranges (14) geringfügig höherer Geschwindigkeit bewegt wird, bis er eine gewünschte Distanz zum Wagen (9) des Querschneiders (8) erreicht hat, nunmehr mit der Vorschubgeschwindigkeit des Sandwichstranges (14) weiterbewegt wird; und daß der Transportwagen (18) nach dem Ablängen des Sandwichelementes (25) zur Bildung des für den Reinigungsvorgang notwendigen Spaltes erneut beschleunigt wird.

2. Verfahren nach Anspruch 1, dadurch gekennzeichnet, daß das Sandwichelement (25) für den Reinigungsvorgang auf dem Transportwagen (18) fixiert wird, nachdem es abgelängt ist.

3. Verfahren nach Anspruch 1 oder 2, dadurch gekennzeichnet, daß während der erneuten Beschleunigung des Transportwagens (18) die Reinigungsbürste (23) in die Position für den Eingriff in den sich bildenden Spalt gefahren wird.

4. Anlage zum kontinuierlichen Herstellen von Sandwichelementen (25) mit Schaumstoffkern, bestehend aus einem Doppeltransportband (1) mit Aufgabevorrichtung (6) für ein schäumfähiges Reaktionsgemisch sowie aus Zuführungen (2, 3) für Deckschichten (4, 5); einem dem Doppeltransportband (1) nachgeordneten, in Produktionsrichtung verfahrbaren Wagen (9) mit Querschneider (8) und einem diesem nachgeordneten, in Produktionsrichtung verfahrbaren Transportwagen (18) mit einer eine Bürste (23) aufweisenden Reinigungsvorrichung (19), wobei dem Transportwagen (18) ein mit dem Querschneider (8) und dessen Wagen (9) gekoppeltes Steuer- und Regelgerät (28) für deren Bewegung und der der Reinigungsvorrichung (19) zugeordnet ist, dadurch gekennzeichnet, daß der Wagen (9) eine Schaltstange (15) aufweist, welche mit zwei am Transportwagen (18) hintereinander angeordneten, über das Steuer- und Regelgerät (28) mit dem Fahrantrieb (26) des Transportwagens (18) verbundenen Näherungsschaltern (16, 17) korrespondiert, wobei der der Schaltstange (15) nächstgelegene, erste Näherungsschalter (16) dem Abbremsen des Transportwagens (18) und der zweite Näherungsschalter (17) der Beschleunigung des Transportwagens (18) in Produktionsrichtung auf eine geringfügig über der Vorschubgeschwindigkeit des Sandwichstranges (14) liegende Geschwindigkeit sowie bei erneuter Freigabe durch die Schaltstange (15) dem weiteren Vorschub des Transportwagens (18) mit einer der Produktionsgeschwindigkeit des Sandwichstranges (14) entsprechenden Geschwindigkeit zum Einstellen einer konstanten Distanz zwischen Transportwagen (18) und Wagen (9) des Querschneiders (8) mittels des Steuer- und Regelgerätes (28) dient.

5. Anlage nach Anspruch 4, wobei der Transportwagen (18) mit einer Klemmvorrichtung (24) zum Fixieren des Sandwichelementes (25) ausgestattet ist, dadurch gekennzeichnet, daß diese Klemmvorrichtung (24) durch das Öffnen einer dem Querschneider (8) zugeordneten Klemmvorrichtung (13) auslösbar ist.

6. Anlage nach Anspruch 4 oder 5, dadurch gekennzeichnet, daß die Reinigungsvorrichtung (19) aus einem gegen die Produktionsrichtung verfahrbaren Längsfahrzylinder (20) besteht, welcher einen eine Reinigungsbürste (23) aufweisenden Querfahrzylinder (22) trägt.

## Claims

1. Process for continuously manufacturing sandwich elements (25) having a foam material core between two facings (4, 5), in which a foam-producing reaction mixture is allowed to expand between the facings (4, 5) and cure to form the foam material core; a sandwich element (25) of the desired length is cut from the continuous sandwich run (14) thus formed by means of a cross cutter (8) disposed on a carriage (9) travelling along at the feed rate of the sandwich run (14); after being cut away, the sandwich element (25) is accelerated by means of a transport carriage (18), with a cleaning brush (23) being passed through the gap thus formed before the sandwich element is transported away, characterised in that, after the cleaning process, the transport carriage (18) is returned to the carriage (9) of the cross cutter (8) to pick up the next sandwich element (25), is braked there and then re-accelerated in production direction and is moved at a speed which is slightly higher than the feed rate of the sandwich run (14) until it has reached a desired distance from the carriage (9) of the cross cutter (8), when it is moved on at the feed rate of the sandwich run (14); and that, after the sandwich element (25) has been cut to length, to form the gap necessary for the cleaning process the transport carriage (18) is accelerated once more.

2. Process according to claim 1, characterised in that, for the cleaning process, the sandwich element (25) is fixed on the transport carriage (18), after having been cut to length.

3. Process according to claim 1 or 2, characterised in that, during renewed acceleration of the transport carriage (18), the cleaning brush (23) is moved into position for engagement into the gap being formed.

4. Installation for continuously manufacturing sandwich elements (25) with a foam material core, comprising a double conveyor belt (1) having a feed device (6) for a foam-producing reaction mixture as well as feeds (2, 3) for facings (4, 5); a carriage (9) with a cross cutter (8) downstream of the double conveyor belt (1) and movable in production direction and, downstream thereof, a transport carriage (18) with a cleaning device (19) and brush (23) which is movable in production direction, with a unit (28) connected to the cross cutter (8) and its carriage (9) being associated with the transport carriage (18) for controlling and regulating their movement and that of the cleaning device (19), characterised in that the carriage (9) has a switch rod (15) which cooperates with two proximity switches (16, 17) disposed one behind the other on the transport carriage (18) and connected by the control and regulating unit (28) to the travelling mechanism (26) of the transport carriage (18), with the first proximity switch (16) closest to the switch rod (15) being used to brake the transport carriage (18) and the second proximity switch (17) being used to accelerate the transport carriage (18) in production direction to a speed slightly higher than the feed rate of the sandwich run (14) as well as, upon re-release by the switch rod (15), to continue to advance the transport carriage (18) at a speed corresponding to the production speed of the sandwich run (14) in order to adjust a constant distance between the transport carriage (18) and the carriage (9) of the cross cutter (8) by means of the control and regulating unit (28).

5. Installation according to claim 4, wherein the transport carriage (18) is equipped with a clamping device (24) for fixing the sandwich element (25) in position, characterised in that said clamping device (24) is triggerable by the opening of a clamping device (13) associated with the cross cutter (8).

6. Installation according to claim 4 or 5, characterised in that the cleaning device (19) comprises a longitudinally operating cylinder (20) which is movable counter to the production direction and carries a transversely operating cylinder (22) having a cleaning brush (23).

## Revendications

1. Procédé de production en continu d'éléments sandwichs (25) comprenant une âme en mousse entre deux couches de couverture (4, 5), dans lequel on fait mousser un mélange de réaction moussant entre les couches de couverture (4, 5) et on le laisse durcir sous la forme de l'âme en mousse; on découpe de la bande sandwich sans fin ainsi formée (14) un élément sandwich respectif (25) de longueur désirée au moyen d'un appareil de découpe transversal (8) monté sur un chariot (9) qui se déplace à la vitesse de progression de la bande sandwich (14), on accélère l'élément sandwich (25) après la coupe au moyen d'un chariot de transport (18) et on fait passer une brosse de nettoyage (23) à travers la fente ainsi formée, avant que l'élément sandwich ne soit enlevé, caractérisé en ce que le chariot de transport (18) est ramené après l'opération de nettoyage qui précède en direction du chariot (9) de l'appareil de découpe transversal (8) afin de recevoir l'élément sandwich suivant (25), qu'il y est freiné et qu'il est ensuite à nouveau accéléré dans la direction de production et déplacé à une vitesse légèrement supérieure par rapport à la vitesse de progression de la bande sandwich (14) aussi longtemps qu'il ait atteint une distance désirée par rapport au chariot (9) de l'appareil de découpe transversal (8), qu'il est alors déplacé avec la vitesse de progression de la bande sandwich (14); et en ce que le chariot de transport (18) est à nouveau accéléré après la coupe à longueur de l'élément sandwich (25) afin de former la fente nécessaire pour l'opération de nettoyage.

2. Procédé selon la revendication 1, caractérisé en ce que l'élément sandwich (25) est fixé pour l'opération de nettoyage sur le chariot de transport (18) après qu'il ait été coupé à longueur.

3. Procédé selon l'une ou l'autre des revendications 1 et 2, caractérisé en ce que pendant la nouvelle accélération du chariot transport (18) la brosse de nettoyage (23) est amenée dans la position pour l'engagement dans la fente qui se constitue.

4. Installation pour la production en continu d'éléments sandwich (25) comprenant une âme en mousse, l'installation comprenant une bande de transport double (1) avec un appareil dispenseur (6) pour un mélange de réaction moussant, ainsi que des alimentations (2, 3) pour des couches de couverture (4, 5); un chariot (9) avec un appareil de découpe transversal (8), mobile dans la direction de production et disposé en aval de la bande de transport double (1), et un chariot de transport (18) avec un appareil de nettoyage (17) équipé d'une brosse (23), ce chariot étant mobile dans la direction de production et agencé en aval du premier chariot, un appareil de commande et de régulation (28) accouplé à l'appareil de découpe transversal et à son chariot (9) étant associé au chariot de transport (18) pour leur déplacement et celui du dispositif de nettoyage (19), caractérisée en ce que le chariot (9) comprend une tige de commutation (15) qui correspond à deux commutateurs de proximité (16, 17) agencés l'un derrière l'autre sur le chariot de transport (18) et reliés via l'appareil de commande et de régulation 28 avec l'entraînement (26) du chariot de transport (18), le premier commutateur de proximité (16) situé le plus près de la tige de commutation (15) servant au freinage du chariot de transport (18) et le second commutateur de proximité (17) à l'accélération du chariot de transport (18) dans la direction de production jusqu'à une vitesse légèrement supérieure à la vitesse de production de la bande sandwich 14, et lors d'une nouvelle libération par la tige de commutation (15) le second commutateur de proximité servant à la poursuite de l'avance du chariot de transport (18) avec une vitesse correspondant à la vitesse de production de la bande sandwich (14) afin d'établir une distance constante entre le chariot de transport (19) et le chariot (9) de l'appareil de découpe transversal (8) au moyen de l'appareil de commande et de régulation (28).

5. Installation selon la revendication 4, où le chariot de transport (18) est équipé d'un dispositif de serrage (24) afin de fixer l'élément sandwich (25), caractérisée en ce que ce dispositif de serrage (24) peut être déclenché par l'ouverture d'un dispositif de serrage (13) associé à l'appareil de découpe transversal (8).

6. Installation selon l'une ou l'autre des revendications 4 ou 5, caractérisée en ce que le dispositif de nettoyage (19) comprend un cylindre moteur longitudinal (20) qui peut être déplacé à l'encontre de la direction de production, et qui porte un cylindre moteur transversal (22) qui comporte une brosse de nettoyage (23).
